# EUROPEAN PATENT APPLICATION

(11) **EP 2 574 683 A1**
(43) Date of publication of application: **03.04.2013**
(21) Application number: 11306254.1
(22) Date of filing: 29.09.2011
(51) Int. Cl.: C21B 5/06, C21B 7/00

(54) **Ironmaking process and installation**

(71) Applicant: L'Air Liquide Société Anonyme pour l'Etude et l'Exploitation des Procédés Georges Claude, 75007 Paris (FR)
(72) Inventor: Traversac, Xavier, 75012 Paris (FR); Dubettier-Grenier, Richard, 94210 La Varenne Saint Hilaire (FR); De Limon, Sébastien, 75002 Paris (FR); Court, Philippe, 94300 Vincennes (FR)
(74) Representative: De Vleeschauwer, Natalie Y.L.D.

(57) **Abstract**

Ironmaking method and installation with recirculation of exhaust gas as a reduction gas and whereby part of the exhaust gas is purged upstream and/or downstream of a CO/CO₂ separation unit, said purged exhaust gas being subjected to a water gas shift reaction for H₂ generation.

## Description

The present invention relates to ironmaking processes, such as iron reduction processes and iron reduction & smelting processes, and corresponding installations in which exhaust gas is partially recycled as a reduction gas.

An example of such a process and installation is the Top Gas Recycle Blast Furnace (hereafter referred to as TGRBF).

Other known denominations for this type of blast furnace include: Ultra Low CO₂ Steelmaking Blast Furnace or ULCOS blast furnace, Oxygen Blast Furnace of OBF and Nitrogen Free Blast Furnace.

The TGRBF provides for reduced coke consumption in the blast furnace, coke consumption being an important cost factor of the iron reduction operation. The TGRBF is also one of the preferred solutions in the ironmaking industry to reduce CO₂ emissions by capture and/or internal or external valorization and/or sequestration of the CO₂ generated by the reduction process.

The underlying principle of a TGRBF is to separate the blast furnace wet exhaust gas, known as top gas, into, on the one hand, a CO₂-enriched fraction and, on the other hand, a CO-enriched fraction. The thus obtained CO-enriched fraction is injected into the blast furnace as a carbon source, thereby reducing the amount of coke required and the amount of CO₂ generated per ton of iron. In the blast furnace, the injected CO also acts as a reduction gas in the smelting process and increases the production rates.

For an efficient operation of the TGRBF, the top gas must be rich in of carbon oxides (CO₂ and CO). It is known thereto to use a blast consisting of oxygen enriched air or oxygen.

In practice, it is not possible to systematically recycle the entire CO-enriched fraction to the blast furnace, and a purge or bleed is necessary to avoid progressive enrichment of the recycled gas with contaminants and inerts such as N₂.

In the article « An evaluation of hydrogen production from the perspective of using blast furnace gas and coke oven gas as feedstocks » by Wei-Hsin Chen, Mu-Rong Lin and Shan-Wen Du, International Journal of Hydrogen Energy, Volume 36, Issue 18, pages 11727-11737, it has been proposed to subject the blast furnace top gas, before or after CO2 removal therefrom, to a water gas shift reaction (CO + H₂O → CO₂ + H₂), whereby a H₂ containing CO-free stream is obtained which can be injected into the blast furnace as a reduction gas or used elsewhere. However, in this manner no effective carbon source, i.e. CO, is recycled to the blast furnace. As a consequence, the object of the TGRBF process, namely reduced coke consumption, is decreased and the amount of CO₂ generated per ton or iron is increased, leading to increased CO₂ emissions or increased costs for CO₂ capture and sequestration compared to when CO is recycled to the blast furnace.

It is an aim of the present invention to provide improved ironmaking processes in which exhaust gas is partially recycled as a reduction gas, without loss of efficiency of the recycle and with improved valorization of the exhaust gas. It is a particular aim to provide such iron reduction and/or smelting processes. It is a further aim of the present invention to provide ironmaking, and in particular iron reduction and/or smelting installations for use in such an improved ironmaking process.

In accordance with the present, improved valorization of the exhaust gas is achieved by first purging part of the exhaust gas from the recycle loop before the separation unit, when the exhaust gas still contains a significant amount of CO₂, and/or after the separation unit, in the form of a CO-enriched gas containing little or no CO₂, and then using said purged part of the exhaust gas to generate hydrogen, hydrogen being a valuable commodity.

The present invention thus relates to an ironmaking process in which at least one fuel is combusted with at least one oxidant and in which at least one exhaust gas containing CO₂ and CO is generated. Said exhaust gas is separated into a CO₂-enriched fraction and a CO-enriched fraction. At least a first part of the CO-enriched fraction is recycled and used as a reduction gas in the ironmaking process. A portion of the exhaust gas is purged and H₂ is generated by subjecting said purged portion of the exhaust gas to a water gas shift reaction. As mentioned above, said portion of the exhaust gas may be purged before separation into a CO₂-enriched fraction and a CO-enriched fraction. Said portion of the exhaust gas may also be purged as a second part of the CO-enriched fraction after separation of the exhaust gas into a CO₂-enriched fraction and a CO-enriched fraction. It is likewise possible to purge the exhaust gas both before and after separation as described above. It is preferred to purge the exhaust gas as a portion of the CO-enriched fraction.

Ironmaking processes, such as iron reduction and/or smelting processes are complex processes requiring steps such as iron ore preparation and supply, fuel preparation and supply, gas compression, etc. In the above description of the process of the invention, only the technical features necessary for distinguishing the invention from the prior art have been explicitly mentioned. The remaining process steps necessary for iron smelting operation are implied.

Typically, the exhaust gas contains CO₂, H₂O and CO, and likely also H₂, N₂ and Ar.

By way of example: in the case of a TGRBF, coke and possibly also coal are combusted with the blast, which may be oxygen enriched, and optionally also with separately injected oxygen, whereby exhaust gas called top gas containing mainly CO₂, H₂O and CO plus some few percent of H₂, N₂ and Ar, is generated. The said exhaust gas is separated into, on the one hand, a CO₂-enriched fraction and, on the other hand, a CO-enriched fraction and whereby at least part of said CO-enriched fraction is used as a reduction gas in the blast furnace. At some stage of the recycle loop, some of the top gas is purged. In accordance with the present invention, said purged top gas is, at least in part, valorized in that it is subjected to a water gas shift reaction so as to generate valuable H₂.

In accordance with the invention, H₂ is advantageously generated by subjecting the purged portion of the exhaust gas to the catalytic process known as "sour shift process".

In order to improve the efficiency of the H₂ generation process, the purged portion of the exhaust gas may be compressed upstream of the water gas shift reaction, preferably without cooling.

Depending on the intended use and valorization of the generated H₂, i.e. if sufficient added value of the H₂ is thereby obtained, the H₂ generated by means of the water gas shift reaction may be further purified in a purification unit. The H₂ purification unit usefully includes an adsorption unit, preferably a pressure swing adsorption unit, or a combination of an adsorption unit and a membrane purification unit. Preferably, use is made of an adsorption unit and in particular of a pressure swing adsorption unit. The waste gas stream of the H₂ purification unit is generally very rich in N₂ and is disposed of, for example by combustion (flare). The at least one fuel typically includes coke or coal or a combination of the two. At least one of the oxidants is advantageously oxygen-enriched air or oxygen, typically of industrial purity (at least 80% O₂, preferably at least 90% O₂ and more preferably at least 95% O₂). The use of oxygen-enriched air and even more so oxygen can reduce the amount of N₂ in the exhaust gas to be separated into a CO₂-enriched fraction and a CO-enriched fraction.

The exhaust gas may be compressed prior to being separated into a CO₂-enriched fraction and a CO-enriched fraction, preferably to a pressure of 20 to 25 bar absolute, so as to improve the efficiency of the separation process. In the case of a TGRBF, for example, such the top gas is compressed by means of what is known in the art as a Top Gas Compressor.

As ironmaking exhaust gases are generally loaded with particulate matter, the exhaust gas is ideally filtered prior to being separated into a CO₂-enriched fraction and a CO-enriched fraction. The exhaust gas may consequently be filtered and thereafter compressed prior to being separated into to fractions.

The exhaust gas is further generally subjected to a drying step before being separated into a CO₂-enriched fraction and a CO-enriched fraction so as to remove at least part of the water content of said exhaust gas and avoid unwanted condensation in the downstream processes and equipment.

According to a preferred embodiment of the invention, the exhaust gas is separated into a CO₂-enriched fraction and a CO-enriched fraction by pressure swing adsorption.

The CO₂-enriched fraction may be purified to increase its CO₂ content. Purification may be necessary depending on the subsequent use that is to be made of said CO₂-enriched fraction. Regulations may require purification to a relatively high standard if the CO₂-enriched fraction is to be captured and sequestered in order to reduce CO₂ emissions. The CO₂-enriched fraction can, for example, be purified cryogenically, by distillation, by condensation, by absorption, by permeation or by a combination of said methods. If possible, at least part of the CO₂-enriched fraction is used as a reagent on-site, either in the ironmaking process itself or in a further installation present on-site. The CO₂-enriched fraction, or part thereof, may also be captured, typically for transport to another user or for sequestration.

Preferably, all or part of the generated H₂ is recycled and used as a reagent in the ironmaking process. Such H₂ may for instance be added to the part of the CO-enriched stream which is recycled and be thus used as a reduction gas in the ironmaking process, for example, in a blast furnace or in an iron ore direct reduction process. Alternatively or in combination with the above, at least part of the generated H₂ may be captured. Said H₂ can then be transported and/or sold. The present invention thus enables the operator of the ironmaking process to valorize the exhaust gas, and more specifically the purged second part of the CO-enriched fraction, in several ways.

According to one embodiment of the invention, the ironmaking process is a blast furnace smelting process with top gas recycle (TGRBF). The exhaust gas which is separated into a CO₂-enriched fraction and a CO-enriched fraction is or includes at least part of the blast furnace top gas and the recycled part of the CO-enriched fraction is injected as a reduction gas into the blast furnace.

Alternatively, the ironmaking process may be an iron ore direct reduction process. In that case, iron ore is subjected to direct reduction in an iron ore direct reduction unit, whereby direct reduced iron ore and a flue gas are generated. The exhaust gas which is separated into a CO₂-enriched fraction and a CO-enriched fraction is or comprises at least part of the flue gas from the iron ore direct reduction unit and the recycled first part of the CO-enriched fraction is injected as a reduction gas into the iron ore direct reduction unit.,

Such an iron ore direct reduction process is typically combined with melting of the direct reduced iron ore in a melter-gasifier, as if for example the case in the processes commercialized under the denominations of COREX® and FINEX®

In that case, the ironmaking process further comprises the steps of (a) conveying the direct reduced iron ore into a melter-gasifier and subjecting the direct reduced iron ore to final reduction and melting in said melter-gasifier, whereby a top gas is generated, (b) injecting the top gas of the melter-gasifier as a reduction gas into the iron ore direct reduction unit.

In the case of a COREX® type process, the iron ore direct reduction unit is or comprises an iron ore reduction shaft into which said recycled first part of the CO-enriched fraction is injected as a reduction gas. In the case of a FINEX® type process, the iron ore direct reduction unit is or comprises a multiple stage fluidized bed iron ore preheating and direct reduction system into which said recycled first part of the CO-enriched fraction is injected as a reduction gas.
The water gas shift reaction also generates CO₂. The CO₂ generated by the water gas shift reaction is preferably treated and handled in a manner analogous to the treatments of the CO₂-enriched fraction of the exhaust gas described above. In particular, the preferably mixed CO₂ generated by the water gas shift reaction may be mixed with the CO₂-enriched fraction obtained by the separation of the exhaust gas.

The present invention also relates to an ironmaking installation adapted for the process of the invention. Said ironmaking installation includes an exhaust gas circuit. The exhaust gas circuit comprises a unit for separation exhaust gas into a CO₂-enriched fraction and a CO-enriched fraction.

The unit for separating the exhaust gas into a CO₂-enriched fraction and a CO-enriched fraction has an exhaust gas inlet fluidly connected to an exhaust gas outlet of the ironmaking installation. The separation unit further has a CO₂-outlet for the CO₂-enriched fraction and a CO-outlet for the CO-enriched fraction of the exhaust gas. The recirculation circuit fluidly connects the CO-outlet of the separation unit to a reduction gas inlet of a reduction gas consuming unit of the ironmaking installation, such as, for example, a blast furnace or an iron ore direct reduction unit.

The recirculation circuit further comprises a purge on the exhaust gas circuit for purging part of the exhaust gas, for example in order to prevent accumulation of contaminants such as nitrogen. Such contaminants enter the system in different ways, for example, with the oxidant (e.g. when the oxidant is oxygen-enriched air), with the iron ore and/or with the fuel (in particular coke and/or coal). Different options exist for said purge. For example, the exhaust gas circuit may comprise a purge upstream of the separation unit. In that case, the purged exhaust gas contains significant amounts of both CO and CO₂. The exhaust gas circuit may also comprise a purge on the recirculation line downstream of the separation unit. In that case, the purged exhaust gas is a portion of the CO-enriched fraction. It is also possible to combine a purge upstream of the separation unit with a purge downstream of the separation unit. In that case, the purged exhaust gas is a mixture of said two gases.

In accordance with the invention, a water gas shift reactor is in fluid connection with said purge, said water gas shift reactor being capable of generating H₂ from the purged exhaust gas, said water gas shift reactor having a H₂-outlet for evacuating a H₂-containing gas from said reactor.

According to an embodiment, the ironmaking installation comprises a top gas recycle blast furnace (TGRBF). The inlet of the separation unit is fluidly connected to the top gas outlet of the blast furnace and the recirculation line fluidly connects the CO-outlet of the separation unit to a reduction gas inlet of the blast furnace.

According to a further embodiment, the ironmaking installation comprises an iron ore direct reduction unit. Said iron ore direct reduction unit has a reduction gas inlet, a direct reduced iron ore outlet and a flue gas outlet. The inlet of the (CO/CO₂-) separation unit is fluidly connected to the flue gas outlet of the iron ore reduction unit. The recirculation line fluidly connects the CO-outlet of the separation unit to the reduction gas inlet of the reduction unit. When the iron ore reduction unit is of the type used in the COREX® process, the direct reduction unit is or comprises a reduction shaft and the recirculation line fluidly connects the CO-outlet of the separation unit to a reduction gas inlet of the reduction shaft. When the iron ore reduction unit is of the type used in the FINEX® process, the direct reduction unit is or comprises a multiple-stage fluidized bed iron ore preheating and direct reduction system and the recirculation line fluidly connects the CO-outlet of the separation unit to a reduction gas inlet of said multiple-stage reduction system. In practice, such a direct reduction unit is normally combined with a melter-gasifier having a direct reduced iron ore inlet connected to the direct reduced iron ore outlet of the reduction unit and having a top gas outlet fluidly connected with a reduction gas inlet of the direct reduction unit.

A preferred water gas shift reactor for use in the invention is a sour shift reactor.

Preferably, a gas compressor is positioned between the purge(s) on the exhaust gas circuit and the water gas shift reactor. A H₂ purification unit downstream of the water gas shift reactor makes it possible to produce high purity and therefore high value H₂.

The purification unit may comprise an adsorption unit, preferably a pressure swing adsorption unit, or a combination of an adsorption unit and a membrane purification unit.

The exhaust gas typically circuit comprises a gas compressor located between the exhaust gas outlet and the separation unit.

Having a dust filter between the exhaust gas outlet and the separation unit makes it possible to remove particulate matter from the exhaust gas before it enters the (CO/CO₂-). Preferably the exhaust circuit comprises a dust filter followed by a compressor upstream of the separation unit. In order to remove at least part of the humidity of the exhaust gas, the exhaust gas circuit may be equipped with gas dryer between the exhaust gas outlet and the separation unit.

The CO₂-outlet of the (CO/CO₂-) separation unit may be fluidly connected to a CO₂-purification unit located downstream of said separation unit. As explained above, regulations may impose such a purification unit if the CO₂ is to be captured and sequestered in order to reduce CO₂ emissions. Such a CO₂ purification unit may comprise a distillation unit, a condensation unit, an absorption unit, a permeation unit or a combination of said units. Advantageously, the CO₂ purification is or comprises a cryogenic purification unit.

The water gas shift unit also comprises a CO₂ outlet through which the CO₂ generated by the water gas shift reaction is evacuated. Said CO₂ outlet is preferably fluidly connected to the CO₂ outlet of the separation unit.

The ironmaking process and installation may include gas purges other than the abovementioned purge(s) for purging the part of the exhaust gas which is sent to the water gas shift reactor. It is, for example known to use a purge of the exhaust gas before its separation into a CO₂-enriched fraction and a CO-enriched fraction, whereby the so purged gas is used for heat recovery and/or flared and/or sent to a power generation unit. It is also known to subject (part of) such purged gas, generally in combination with additional fuel and oxidant, to combustion within the ironmaking process/installation for heat generation. The separation into a CO₂-enriched fraction and a CO-enriched fraction is only performed on the non-purged exhaust gas, i.e. the exhaust gas remaining within the recirculation circuit.

As the present invention enables improved valorization of the exhaust gas by generating H₂ therefrom and even high purity H₂ when contaminants and inerts are removed from the H₂ produced in the water gas shift reactor if said H₂ is purified in a H₂ purification unit downstream of the water gas shift reactor, it may be profitable to reduce the amount of exhaust gas purged without subsequent treatment with the water gas shift reaction or even not to purge any of the exhaust gas except for treatment by the water gas shift reaction, so that more or even all of the purged exhaust gas is subjected to the water gas shift reaction, the non-purged exhaust gas providing the CO-enriched fraction which is recycled and used as a reduction gas. In this manner (at constant demand for the CO-enriched fraction as reduction gas in the ironmaking process) the amount of H₂ generated by the ironmaking process and installation of the invention can be increased.

The present invention thus makes it possible to flexibly adapt the process to an increase in energy demand (in which case a higher portion of the exhaust gas can be purged and sent to a power generation unit) or to an increase in hydrogen demand (in which case a higher portion of the exhaust gas is used in the water gas shift reaction to generate H₂). Similarly, the process can be optimized for financial profitability, taking into account energy market prices and hydrogen market prices.

It is an advantage of the present invention that a valuable commodity, H₂, is generated at relatively low cost as a byproduct of the iron smelting process. It is a particular advantage of the present invention that H₂ can thus be generated without losing or diminishing the known benefits of recycling CO-enriched gas as a reduction gas.

The H₂ thus generated can immediately be used or be conditioned for storage and/or transport.

The generated H₂ may be used on-site, either in the iron smelting installation itself or in a further installation present in-site.

The generated H₂ may also be transported for use elsewhere. The generated H₂ can for example be used in fuel cells, including in fuel-cell driven vehicles.

Ironmaking installations have a strong tendency to be geographically spread. It is a particular advantage of the present invention that limited amounts of hydrogen can be produced locally including in areas with a genuine hydrogen demand but where said demand is too limited to justify the local construction of a traditional, large-scale hydrogen production unit. In this manner, the costs for hydrogen transport can also be reduced.

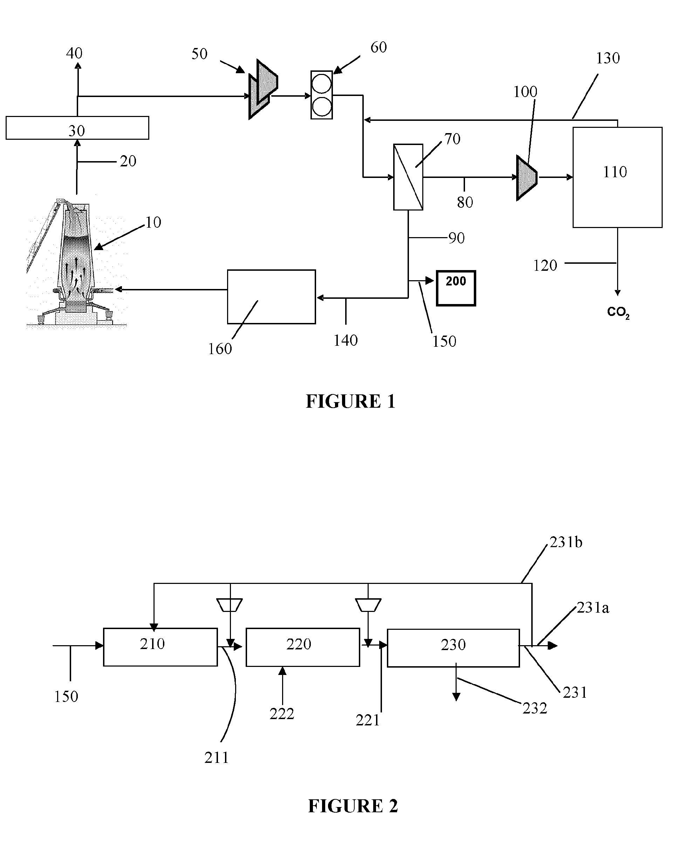

The invention is illustrated hereafter with reference to figures 1 and 2, whereby, figure 1 is a schematic representation of a TGRBF installation according to the invention and figure 2 is a more detailed schematic representation of the purge 200 of the recirculation line of the installation of figure 1.

Blast furnace 10 generates an exhaust gas 20, generally referred to as top gas which contains mainly CO₂, H₂O and CO plus some few percent of H₂, N₂, Ar and which leaves the blast furnace 10 at its top end.

Filter 30 filters the exhaust gas 20 in filter to remove dust and other particulate matter therefrom.

Part of the exhaust gas may be purged via purge 40 and sent to an energy generation unit. Alternatively none of the exhaust gas 20 may be purged.

The non-purged exhaust gas is compressed by top gas compressors 50 and the compressed gas is dried in dryer 60 so as to condense out part of its water content.

The dried exhaust gas is sent to pressure swing adsorption (PSA) unit 70 where it is separated in a CO₂-enriched fraction 80 and a CO-enriched fraction 90.

The CO₂-enriched fraction is compressed by compressor 100 and the compressed CO-enriched fraction is sent to cryogenic purification unit 110 where the CO₂-enriched fraction is concentrated to substantially pure CO₂ 120 ready for capture and/or sequestration. The highly impure remainder 130 of the CO₂-enriched fraction can be recycled to the inlet of pressure swing adsorption unit 70 or may otherwise be disposed of.

It is to be noted that it is often the case that the CO₂-enriched fraction leaving the separation unit 70 still contains a significant amount of CO. Depending on the demand for H₂, it may be profitable also to use the CO contained in the CO₂-enriched fraction partially or totally for H₂ generation by means of the water gas shift reaction. It is therefore an option to send at least part of the gas 130 left as a byproduct of the CO₂-purification to the water gas shift reactor, or even, in particular if the installation does not comprise a CO₂-purification unit 110, to send all or part of the CO₂-enriched fraction leaving the separation unit 70 to the water gas shift reactor, whereby said option is not restricted to the illustrated embodiment, but is in fact generally applicable to the invention.

A first part 140 of the CO-enriched fraction 90 of the exhaust gas is preheated in hot stoves 160 before being injected back into blast furnace 10 as reduction gas and carbon source, in the manner known for TGRBF processes.

In accordance with the invention, a second part 150 of the CO enriched fraction 90 of the exhaust gas is bled the recirculation line at purge 200.

Said bled or purged part 150 is then treated in the manner shown in figure 2.

The purged CO-enriched gas is compressed by compressor 210 and the compressed purged gas 211 is subjected to a water gas shift reaction, and more specifically a sour shift reaction, in water gas shift reactor 220. Thereto, the water gas shift reactor comprises a steam inlet 222. The steam may be specifically generated for the water gas shift reactor or may be available from another on-site steam source, such as a heat recovery boiler. The H₂- and CO₂-containing gas 221 leaving reactor 220 is further purified in purification unit 230. The substantially pure H₂ 231 can be used within the TGRBF process, for example as a reduction gas, but will generally be more profitably used in other installations or conditioned for commercialization. In the illustrated embodiment, fraction 231a of the substantially pure H₂ is captured and valorized and the remaining fraction 231b is recycled to different upstream stages of the H₂ generation process. The remaining fraction 232 of gas 221, containing the eliminated impurities, can be recycled to the TGRBF process or otherwise be disposed of.

## Claims

1. Ironmaking process comprising (a) combustion of at least one fuel with at least one oxidant, (b) generation of at least one exhaust gas containing at least CO₂ and CO and (c) exhaust gas recirculation, whereby:
• at least part of the exhaust gas is separated into a CO₂-enriched fraction and a CO-enriched fraction and
• at least a first part of said CO-enriched fraction is recycled and used as a reduction gas in the ironmaking process,
and whereby a portion of the exhaust gas is purged before separation into a CO₂-enriched fraction and a CO-enriched fraction and/or, as a second part of the CO-enriched fraction, after separation into a CO₂-enriched fraction and a CO-enriched fraction,
**characterized in that** H₂ is generated by subj ecting said purged portion of the exhaust gas to a water gas shift reaction.

2. Ironmaking process according to claim 1, whereby H₂ is generated by subjecting the purged second part of said CO-enriched fraction to a sour shift process.

3. Ironmaking process according to any one of the preceding claims, whereby the CO₂-enriched fraction is captured.

4. Ironmaking process according to any one of the preceding claims, whereby said ironmaking process is a blast furnace smelting process with top gas recycle, whereby the exhaust gas is or includes at least part of the blast furnace top gas and whereby said recycled first part of the CO-enriched fraction is injected as a reduction gas into the blast furnace.

5. Ironmaking process according to any one of claims 1 to 3, whereby the ironmaking process is an iron reduction process or an iron reduction-and-smelting process comprising the step of:
• subjecting iron ore to direct reduction in an iron ore direct reduction unit, whereby direct reduced iron ore and a flue gas are generated and whereby the exhaust gas is or comprises at least part of the flue gas from the iron ore direct reduction unit and whereby said recycled first part of the CO-enriched fraction is injected as a reduction gas into the iron ore direct reduction unit.

6. Ironmaking process according to claim 5, further comprising the steps of:
• conveying the direct reduced iron ore into a melter-gasifier and subjecting the direct reduced iron ore final reduction and melting in said melter-gasifier, whereby a top gas is generated, and
• injecting the top gas of the melter-gasifier as a reduction gas into the iron ore direct reduction unit.

7. Ironmaking process according to claim 5 or 6, whereby the iron ore direct reduction unit comprises an iron ore reduction shaft into which said recycled first part of the CO-enriched fraction is injected as a reduction gas

8. Ironmaking process according to claim 5 or 6, whereby the iron ore direct reduction unit comprises a multiple stage fluidized bed iron ore preheating and direct reduction system into which said recycled first part of the CO-enriched fraction is injected as a reduction gas.

9. Ironmaking installation having an exhaust gas circuit comprising:
• a unit for separating the exhaust gas into a CO₂-enriched fraction and a CO-enriched fraction having a gas inlet fluidly connected to an exhaust gas outlet of the ironmaking installation, said separation unit further having a CO₂-outlet for the CO₂-enriched fraction and a CO-outlet for the CO-enriched fraction,
• a recirculation circuit fluidly connecting said CO-outlet to a reduction gas inlet of a reduction gas consuming unit of the ironmaking installation,
• a purge on said exhaust gas circuit for purging part of exhaust gas:
(a) upstream of the separation unit and/or
(b) downstream of the separation unit from the recirculation line which fluidly connects the CO-a purge on said recirculation line for purging part of the CO-enriched fraction from the recirculation line,
**characterized in that** the installation further comprises a water gas shift reactor in fluid connection with said purge, said water gas shift reactor having a H₂-outlet for evacuating a H₂-containing gas from said reactor.

10. Ironmaking installation according to claim 9, comprising a top gas recycle blast furnace, whereby the inlet of the separation unit is fluidly connected to the top gas outlet of the blast furnace and whereby the recirculation line fluidly connects the CO-outlet of the separation unit to a reduction gas inlet of the blast furnace.

11. Ironmaking installation according to claim 9, comprising an iron ore direct reduction unit having a reduction gas inlet and a direct reduced iron ore outlet and a flue gas outlet, and whereby the inlet of the separation unit is fluidly connected to the flue gas outlet of the direct reduction unit and whereby the recirculation line fluidly connects the CO-outlet of the separation unit to the reduction gas inlet of the direct reduction unit.

12. Ironmaking installation according to claim 11, whereby the direct reduction unit comprises a direct reduction shaft and whereby the recirculation line fluidly connects the CO-outlet of the separation unit to a reduction gas inlet of the direct reduction shaft.

13. Ironmaking installation according to claim 11, whereby the direct reduction unit comprises a multiple stage fluidized bed iron ore preheating and direct reduction system and whereby the recirculation line fluidly connects the CO-outlet of the separation unit to a reduction gas inlet of said multiple stage direct reduction system.

14. Ironmaking installation according to any one of claims 11 to 13, further comprising a melter-gasifier having a direct reduced iron ore inlet connected to the direct reduced iron ore outlet of the reduction unit.

15. Ironmaking installation according to any one of claims 9 to 14, whereby the water gas shift reactor is a sour shift reactor.
